# EUROPEAN PATENT SPECIFICATION

(11) **EP 1 729 572 B1**
(45) Date of publication and mention of the grant of the patent: **14.03.2012**
(21) Application number: 05722288.7
(22) Date of filing: 29.03.2005
(51) Int. Cl.: A01L 1/02

(54) **HORSESHOE**
HUFEISEN
FER À CHEVAL

(30) Priority: 29.03.2004 SE 0400846
(43) Date of publication of application: 13.12.2006
(73) Proprietor: Svenska Elitskon AB, 903 26 Umeå (SE)
(72) Inventor: LUNDQVIST, Erik, 905 81 Umeå (SE)
(74) Representative: Sörby, Lennart
(86) International application number: PCT/SE2005/000463
(87) International publication number: WO 2005/092091

(56) References cited:
- WO-A1-99/08512
- DE-A1- 3 414 458
- US-A- 526 051
- US-A- 585 992
- US-A- 5 740 866
- US-A- 6 082 462
- US-A1- 2002 189 823
- US-B1- 6 263 973

## Description

The present invention relates to a horseshoe which is compliant with the natural expansion and relative movement of the hoof of the horse during the hoof's impact with the ground surface. In particular, the present invention relates to a horseshoe formed by a solid homogenous material.

### Background of the Invention

Horseshoes have been used for centuries in order to protect the horse's hoofs and to enhance performance. Today, a wide variety of horseshoes, adapted to different breeds and different tasks, are available. In particular in racing and trotting (harness racing) much attention has been given to provide horseshoes that can help to optimize the performance of the horse on the track, yet not inflict injuries in the short or long term. Horseshoes commonly used today are made of steel, aluminium alloys, and titanium, for example. To a lesser extent also plastic and rubber shoes, with or without metallic reinforcements, are used. The shoes are typically expensive, and for a horse engaged in training and racing, wears down in the order of weeks. Taken in all, the costs for providing a horse with shoes adequate for racing is considerable. In addition the frequent reshoeing, is in itself a potential risk of injuring the hoof.

The teaching of both the prior art and the present invention can better be appreciated if some of the biomechanical events associated with the hoof's impact and interaction with the ground surface are understood. The biomechanics of the horse hoof will hereinafter be referred to as the hoof's mechanism.

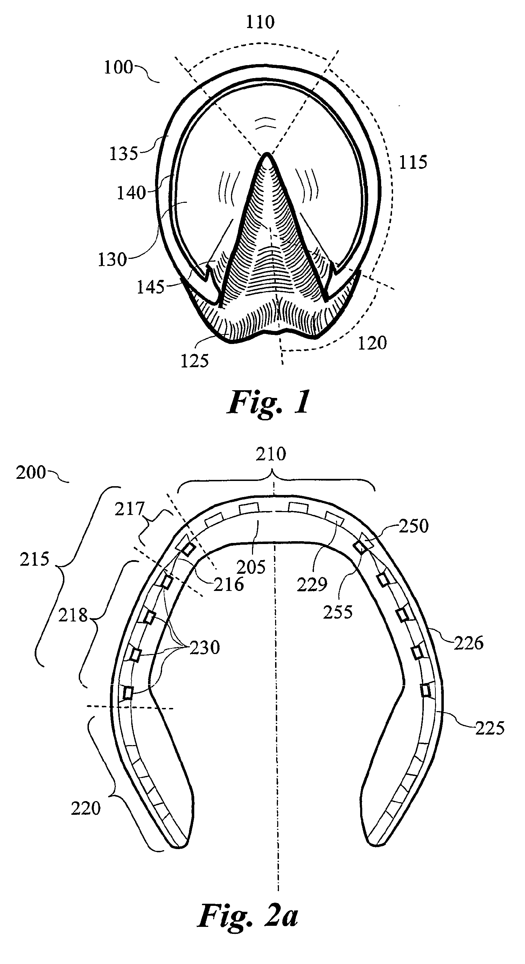

A typical forefoot or hoof 100 of a horse is schematically illustrated in FIG. 1. The hind foot is similar, however, the toe of the hind foot is more pointed than that of the forefoot. The hoof 100 is generally divided into five relatively distinctive segments, a toe 110, quarters 115, heels 120, frog 125 and sole 130. The outermost portion of the hoof 100 is the wall 135. The wall 135 is normally thickest at the toe 110 and gradually thins towards the heels 120. Inside the wall is the sole 130. Between the wall 135 and the sole 130 is the white line 140. At the heels 120, the wall 135 turns inwards to form the bars 145 that converge toward one another. The frog 125 is to be found between the bars 145 and the sole 130. The wall 135, bars 145 and frog 125 are the primary weight-bearing structures of the hoof 100. Apart from for a strip about a centimetre wide, or less, inside of the white line 140, the sole does normally not bear weight.

The frog 125 may be seen as the foot pad of the horse and is the most elastic structure of the hoof 100. When the hoof 100 strikes the ground, the heels 120 expand, aiding in the distribution of concussion. The heel 115 normally lands slightly ahead of the toe 110, and this results in immediate heel expansion, indicated by arrows 150 in the figure, due to the action of the frog 125. As the frog 125 is forced upward, the frog stay (the central spine of the frog 125) acts as a wedge in the digital cushion positioned above the frog 125 in the interior of the hoof 100. This forces the digital cushion to expand, primarily in an outward direction, because it is confined by structures of the hoof 100 in other directions. The frog stay coming up from below naturally limits distal expansion of the digital cushion. After the hoof is lifted from the running surface, the heel areas contract. The hoof performing a rotating motion during the impact, from heel to toe, will cause a relative motion of the hoof's segments in also the upward/ downward direction (perpendicular to the plane formed by the hoof's underside). In short, the unrestricted (barefooted) hoof exhibit both expansion and contraction in radial directions as regards to the centre of the hoof and relative movements in the direction of the horse leg. The hoof's mechanism reduces the forces caused by the impact with the ground, increases the grip on the surface, and creates a flow of fluids in the extremities of the horse.

Typical prior art horseshoes restrict expansion of the heel 115, resulting in increased stress in the hoof 100 and legs, particular during extreme conditions such as in racing. It is believed that the occurrence of hoof cracks is sometimes caused by the flexing and widening action of the foot and hoof working against the nails associated with a substantially inflexible horseshoe. A steel horseshoe is known to be more flexible in this regard than an aluminium or titanium horseshoe, but all tends to restrict the natural movements of the hoof to a too great extend. On the other hand, horseshoes of resilient material, such as polyurethane, tends to be to flexible and hence not provide sufficient support. In particular polyurethane shoes have shown a pronounced tendency skewing, which may lead to that small stones, for example, enters in between the shoe and the hoof. This may impair the step and possibly inflict injuries to the hoof.

Horseshoes that strives to be compliant with the hoof's mechanism is known in the art. One approach, exemplified by the teachings of US 6,497,293 is to form the horseshoe in a resilient material with a plurality of metallic inserts. The resilient material may for example be natural rubber, synthetic rubbers or polyurethanes and the metallic insert aluminium or steel. The metallic inserts are made rigid and so arranged to provide portions of the shoe with increased flexibility in-between the metallic inserts. Composite horseshoes typically becomes comparably high (or wide). A high horseshoe has the drawback of increasing the friction to the ground surface too much and thereby cause a too rapid and rigid halt during the impact. The rapid halt increases the pressure and stress in the hoof, foot, leg and joints. In addition, the fundamentally different materials will most probably have different resistance to wear, which may cause unwanted and abrupt changes in the performance as the shoe is worn down.

US 6,082,462 teaches a horseshoe comprising of a plurality of segments of relatively inflexible materials which are affixed to each other via a flexible material or flexible structure, forming articulation points allowing a relative movement of the inflexible parts of the shoe. Accordingly the shoe may follow the hoof's widening during impact. However, the disclosed horseshoes are complicated and the joining of inflexible material (metal) with flexible materials or structures is far from trivial considering the forces present during the impact and the resistance to wear required.

Additionally, both the above discussed horseshoes have the common drawback of requiring relatively complicated manufacturing processes, including materials, i.e. metals and plastics, that are formed in fundamentally different processes. This typically leads to costly products.

A horseshoe in accordance with the preamble of claim 1 is known from the document US-A-6 263 973.

### Summary of the Invention

The objective problem is to provide a horseshoe that is compliant with the natural expansion and relative movement of the hoof of the horse during the hoof's impact with the ground surface, yet provide sufficient support to the hoof. In addition the horseshoe should have a high resistance to wear, and the wear inevitably occurring should be controlled and predictable. The horseshoe should be possible to manufacture to a reasonable costs.

The problem is solved by the horseshoe as defined in claim 1.

In order to achieve the above-mentioned object, according to the invention, a horseshoe made of a solid homogenous metal is provided. The horseshoe comprises a toe section, two side sections and two heel sections. At least one bending articulation region is provided in each side section, said articulation regions realized by a local structural weakening of the horseshoe.

According to one embodiment of the invention the horseshoe comprises of an essentially flat approximately U-shaped body and a ridge formed on the outer part of the body and extending along the body. The ridge has a first shape in the toe section and a second shape in the side sections, and the second shape of the ridge have a smaller cross sectional area than the first shape and the transitions between the first and second shapes forms the articulation regions. The articulation regions are formed in close proximity to the toe section. Considering the hoof of a horse, the articulation regions should be located as to correspond to the transition from the toe to the quarters of the hoof.

According to a further embodiment of the invention the ridge is provided with at least one cut-out in each of the two side sections to reduce the cross sectional area of the ridge, located in the articulation regions. Alternatively, or in combination, through holes, extending through the body of the shoe, are arranged in the articulation region.

The horseshoe according to the invention is made of a steel material, preferably a hardened boron steel material, typically with a hardness above 10 HRC, and even more preferably above 30 HRC.

Thanks to the invention a horseshoe is provided that is compliant with the hoof's mechanism, and yet provide sufficient support to the hoof and is resistant to wear. Compared to the prior art, the horseshoe according to the invention provides a flexibility of the shoe that is governed to articulation regions, which are an integral part of shoe, not provided as complicated hinges or requiring joining of different materials. This greatly simplifies the construction and gives a more reliable product, as regards to the resistance to wear, for example.

Embodiments of the invention are defined in the dependent claims. Other objects, advantages and novel features of the invention will become apparent from the following detailed description of the invention when considered in conjunction with the accompanying drawings and claims.

### Brief Description of the Drawings

The invention will now be described in detail with reference to the drawing figures, in which
Fig. 1 is a schematic illustration of the parts of a horse hoof;
Fig. 2 a) is a schematic view of a horseshoe according to the invention, and in b) in an elevated view;
Fig. 3 is a schematic view of a horseshoe according to a preferred embodiment of the invention;
Fig. 4 a) and b) illustrates schematically the bending occurring in a horseshoe according to the invention; and
Fig. 5 is an illustration of a horseshoe according to the invention mounted on a horse hoof..

### Detailed Description of the invention

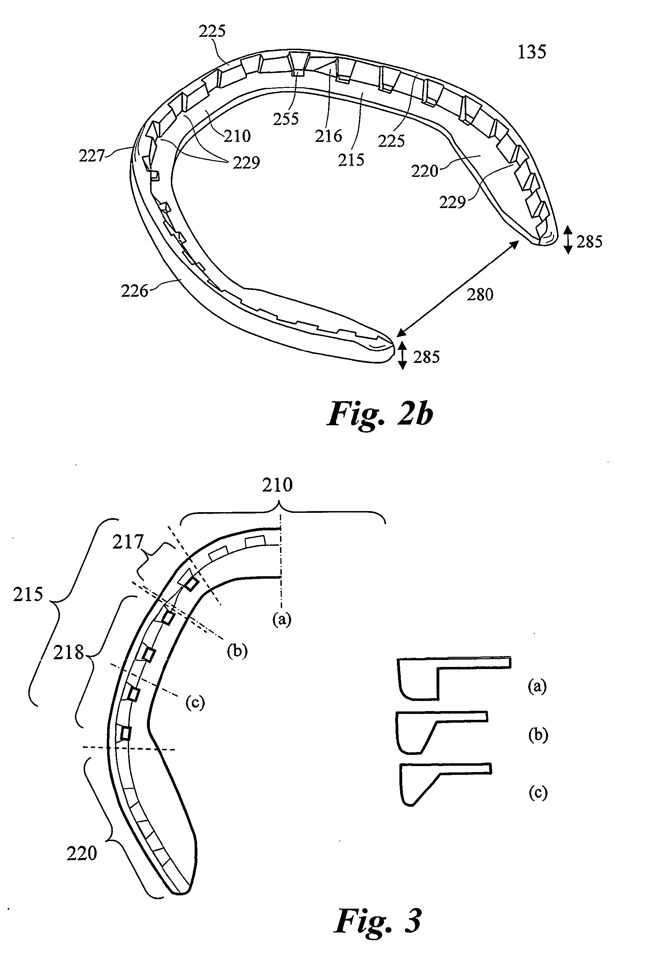

FIG. 2a depicts the horseshoe according to the invention showing the horseshoe 200 from its under side, i.e. the side of the shoe interacting with the ground. FIG. 2b is a slightly elevated view from the under side. The upper side, bearing on the horse's hoof is essentially flat. The shoe comprises of a relatively thin, i.e. compared to traditional horseshoes, body 205, and is divided into a plurality of sections: a toe section 210, two side sections 215 and two heel sections 220. The sections are made to correspond to the toe 110, quarters 115 and heels 120, respectively of the hoof 100. The horseshoe 200 is generally U-shaped with a centreline (dashed) in the middle of the toe section 210 bisecting the U-shape. The body 205 is wider in the toe section 210 and the heel sections 220 than in the side sections 215. A ridge 225, or grap, is formed on the outer section of the body 205 and extending along the entire body 205, the outer wall 226 of the ridge 225 being essentially in line with the outer periphery of the body 205. The ridge outer wall 226 is essentially perpendicular to the flat upper surface of the shoe 200 and the outer upper edge 227 is rounded. The ridge may be provided with a plurality of cut outs 229, which reduces the weight and increases the grip. The side section 215 is provided with a plurality of through holes 230, extending through the body 205, to accommodate nails for fastening the shoe 200 to the hoof 100. The shoe 205 is made in a homogeneous solid material, preferably a steel material characterized by a high hardness. Suitable properties of the material and examples of available materials will be given below.

The choice of a steel material with inherent spring properties, as compared to more rigid materials as aluminium or titanium, in combination with the geometry of the shoe affords the possibility to provide a horseshoe that has a flexibility that is compliant with the hoof's mechanism and at the same time not too flexible, which would impair the support of the hoof. The flexibility needed to cope with the expansion and retraction of the hoof, i.e. in the plane defined by the upper flat surface of the shoe, is preferably in the order of 2-5 mm as measured as the relative movement of the rear end of the heel sections 220. This is illustrated by the arrows 280 in FIG. 2b.

The flexibility in the upward and downward direction, i.e. in directions essentially perpendicular to the plane defined by flat upper surface of the shoe 200 in rest, can be made larger than in the sideway directions, without negatively effect the support to the hoof. The shoe should preferably allow a downward/upward flexibility in the order of 5-25 mm as measured as the elevation of the rear section of the heel section 220 compared to the toe section 210, although the movement of the hoof in this direction typically is below 10 mm. The flexibility of the shoe in the upward/downward direction is schematically illustrated by arrows 285 in FIG. 2b. It should be understood that the movement can be simultaneous in more than one direction. The flexibility of the horseshoe 200 should then subjected to forces typically occurring in use, be a fully elastic bending, i.e. after the force have been removed, the shoe should retain its original shape. The bending occurring in the shoe should as much as possible be in compliant with the hoof's mechanism and relative movements in the hoof, as described above.

According to the invention at least one bending articulation region, or bending onset region is provided in each side section 215. The bending articulation regions 216 are realized by forming a structural weakening of the shoe 200 within each side sections 215. The articulation regions 216 are located in the foremost part of the side sections 215 and in close proximity with the toe section 210. If related to the hoof 100, the articulation regions 216 should preferably be located in the region of the transition from the toe 110 to the quarters 115. Due to the fact that the shoe 200 is made in a homogenous solid metal, preferably essentially spring steel, and given the constrains that the bending should be elastic, it should be understood that the bending associated with the articulation regions 216 will occur over a section of the shoe 200.

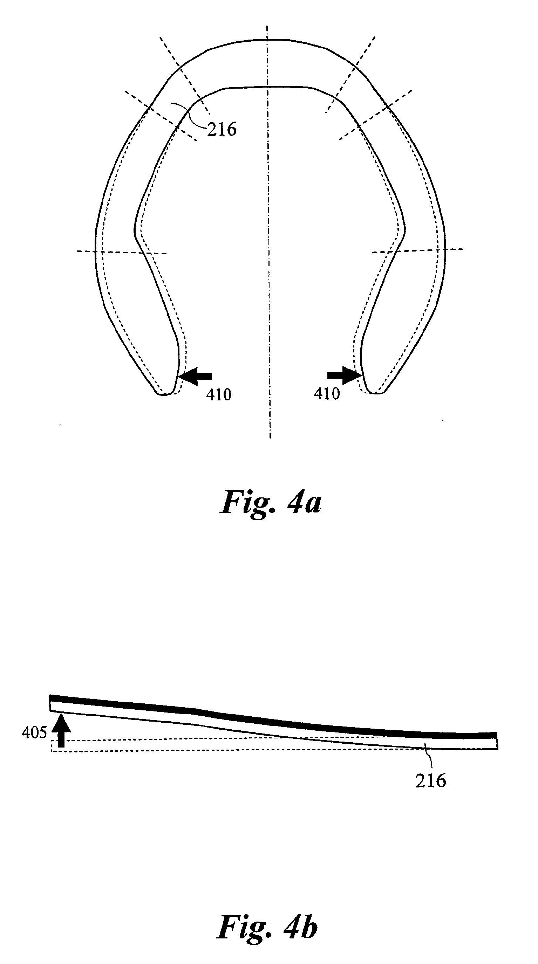

According to a preferred embodiment of the invention the articulation regions 216 are realized by primarily altering the shape of the ridge 225, as schematically illustrated in the cross sections of different sections of the shoe shown in FIG. 4. The cross section (a) of the ridge 225 in the toe section 210 is essentially rectangular (with one rounded corner), giving an inner ridge wall 228 that is essentially perpendicular to the body 205. In the side sections 215 the thickness of the ridge is reduced, to form the articulation regions 216, for example and preferably by decreasing the upper thickness of the ridge, giving an angle between the ridge inner wall 228 and the body 205 that exceeds 90°. The cross section (b) of the ridge 225 will in the side sections 215 preferably have the shape of a trapezoid with the upper of the two parallel sides being shorter than the lower. Hence, in the side sections 215, a transition of the shape of the ridge is occurring to reduce the amount of material in the ridge, which is illustrated by the reduced area of the cross sectional views of the ridge in the toe (a) and the front side section (b), respectively. The reduction of the cross sectional area should preferably be in the order of 20-40 %. Whereby, in combination with the reduction of the width of the body 205 taking place in the side sections 215, well defined articulation regions 216 for the spring motion of the shoe is formed in each side section. The transition between the first (a) and second shape (b) of the ridge can be extended over a section of the side section 215, as indicated in FIG. 2. These sections will be referred to as the front side sections 217. Hence, the side sections 215 comprises a front side section 217 and a rear side section 218. The front side section 217 is preferably substantially shorter than the rear side section 216, and typically and preferably in the order of 1 cm of length, or alternatively constitute approximately 10% of the total length of the shoe. Given the conditions above concerning the hoof's mechanism and relative movement, the shoe 200 is formed so that the predominant part of the bending is restricted to the side sections 215. In particular the geometry of the shoe 200 is so arranged as to restricted the major part of the bending to the front side sections 217. Preferably above 50% of the total bending, and even more preferably around 80% of the total bending of the shoe under normal use, is restricted to the front side sections 217.

The forming of a well defined articulation region 216 may be enhanced further by reducing the amount of material in the front side sections 217 by other means, for example by placing a cut-out 250 in the ridge in the same region as the change in ridge thickness and/or provide a through hole 255 in the body 205 in the same region. The structural weakening may alternatively be seen as a reduction in material per length unit in the side parts 215. The reduction of the total amount of material in the front side section 217 as compared to an equally long section of the toe part 210, is preferably more than 40%.

The reduced width of the body 205 in the side sections 215 exhibit an advantage also in the fitting of the shoes to individual hoofs. The fitting will primarily consist of a widening or narrowing of the shoe in the side sections 215, and the narrow body 205 in these sections will prevent skewing of the shoe 200. Articulation regions 216 can be formed also by locally altering the material properties of the shoe, for example arrange so that the steel is less hardened in the front side sections 217.

According to the invention the toe section 210 and the heel sections 220 are essentially rigid. The flexibility of the side parts 215 may be further tailored by altering the thickness and/or shape of the ridge 225. In FIG. 3 is illustrated that the ridge 225 is further reduced, as regard to its cross sectional area (c) at a location defining the transition from the front side section 217 to the rear side section 218. Schematically illustrated in FIG. 4a and 4b is the bending behaviour of the shoe 200 according to the preferred embodiment. In FIG. 4a outward forces, illustrated by arrows 410 are applied to the heel parts. The outward bending exhibit an onset at the articulation region 216 in the front side part 217, and the bending continues throughout the front side part 217. The dashed line represents the inner edge of the shoe 200 in rest. The horseshoe according to the preferred embodiment exhibit a bending around 30% (3-5 mm, as compared to the above described requirements) with a load of approximately equivalent of 40 kg. The bending is linear up to a load of 110 kg. In FIG. 4b the toe section is held fixed and an upward force, illustrated , by arrow 405 is applied to one of the heel parts 220. The bending (exaggerated in the illustration) exhibit an onset approximately at the articulation region 216 in the front side part 217, and the bending continues throughout the front side part 217 and the rear side part 218, giving an upward curvature. The force need for a bending of approximately 5 mm in the upward/downward direction is substantially lower than in the outward direction (FIG. 4a).

The arrangements according to the invention gives, as demonstrated above, flexibility in certain directions, and as appreciated by the skilled in the art combinations of these directions. However, as described in the background, skewing of the horseshoe, particular of the heel parts 220, should be avoided. The horseshoe 200 according to the invention exhibit negligible skewing; to rotate the heel part inwards as to give a 1 mm gap on its outside requires a force that exceed an equivalent of 1500 kg.

In an alternative embodiment of the present invention the ridge 225 is reduced also in the heel sections 220 of the shoe, possibly even more reduced than in the side sections 215, giving an even larger angle between the ridge inner wall and the body 205 in the heel sections 220. Due to an increased width of the body 205 in the heel sections the heel section in itself will be relatively rigid at least in the radial direction. In the upward/downward direction the heel section will be more flexible and assist in following the hoof's mechanism. The increased width of the body 205 in the heel sections helps in bearing the hoof. In addition the increased width prevents the heel section from sinking into the ground.

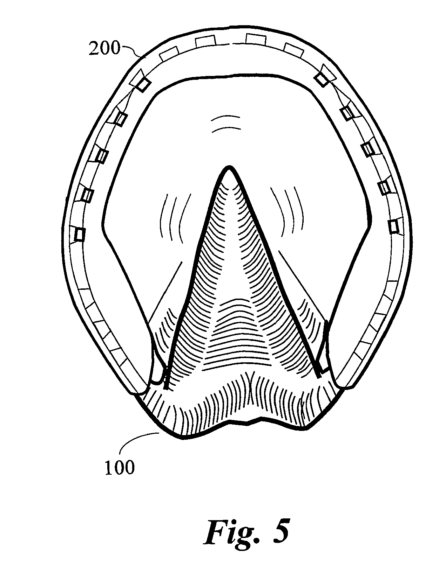

Illustrated in FIG. 5 is a shoe according to the present invention fitted on a horse hoof. Care has been taken not only to provide a shoe that is compliant to the hoof's mechanism but also in other aspects enhance the performance and add support in ways in line with how the unshod hoof functions. The ridge 225, having an essential perpendicular outer wall and placed in the outer part of the body, can be seen as an natural extension of the wall 135 of the hoof. In contrast to traditional horseshoes, the horseshoe 200 according to the present invention is only provided with one ridge 225, which is inwardly followed by the flat body 205. The new geometry gives room for more material, for example gravel, under the sole 130 during the pushing phase of the step. This increases the grip and hence improves the horse's balance. The overall low height of the novel horseshoe 200 leads to a reduced friction during the impact, the natural slight sliding motion on the surface will remain, which reduces the recoil impact inflicted on the hoof, foot and leg.

The shoe according to the present invention utilizes the inherent spring properties of the solid homogenous material, preferably steel. Suitable elasticity modulus is that typically found for steel materials, i.e. around 200 GPa. The material should preferably have a high hardness, preferably above 10 HRC, and even more preferably above 30 HRC. Suitable steel is commercially available, for example boron steel SB27M12CB from the supplier Fundia/Ruukki industrial group. The manufacturing method is drop forging according to conventional and known methods. The steel is hardened and annealed.

From the invention thus described, it will be obvious that the invention may be varied in many ways. Such variations are not to be regarded as a departure from the scope of the invention, and all such modifications as would be obvious to one skilled in the art are intended for inclusion within the scope of the following claims.

## Claims

1. A horseshoe (200) made of a solid homogenous metal comprising a toe section (210) on each side followed by side sections (215) and heel sections (220), **characterised in that** at least one bending articulation region is provided in each side section (215), said articulation regions (216) realized by local structural weakenings of the shoe (200), wherein the articulation regions are formed in close proximity to the toe section and positioned as to correspond to the transition from the toe to the quarters of a hoof, and **in that** the toe section (210) and the heel sections (220) are rigid.

2. The horseshoe according to claim 1, further **characterized by** an essentially flat approximately U-shaped body (205) and a ridge (225) formed on the outer part of the body and extending along the body (205), said ridge (225) having a first shape in the toe section (210) and at least a second shape in the side sections (215), wherein the second shape of the ridge have a smaller cross sectional area than the first shape and the transitions between the first and second shapes forms the articulation regions (216).

3. The horseshoe according to claim 1 or 2, **wherein** articulation regions (216) for the springing motion of the horseshoe are formed in close proximity to the toe section (210).

4. The horseshoe according to claim 1 or 2, **wherein** articulation regions for the springing motion of the horseshoe are located as to correspond to the transition from the toe (110) to the quarters (115) of a horse hoof (100).

5. The horseshoe according to any of claims 2 to 4, **wherein** the ridge (225) is provided with at least one cut-out (250) in each of the two side sections (215) to reduce the cross sectional area of the ridge, and the cut-outs (250) are located in the articulation regions (216).

6. The horseshoe according to any of claims 2 to 5, **wherein** the body (205) is provided with at least one through hole (255) in each of the two side sections (215) to reduce the cross sectional area of the ridge, and the through holes (255) are located in the articulation regions (216).

7. The horseshoe according to any of the above claims, **wherein** the horseshoe (200) is made of a hardened boron steel material.

8. The horseshoe according to any of the above claims, **wherein** the horseshoe (200) is made of a steel material with a hardness above 10 HRC, and even more preferably above 30 HRC.

## Patentansprüche

1. Hufeisen (200) aus einem festen homogenen Material mit einem Zehenabschnitt (210), der auf jeder Seite von Seitenabschnitten (215) und Fersenabschnitten (220) gefolgt wird, **dadurch gekennzeichnet, dass** zumindest ein Biegegelenkbereich in jedem Seitenabschnitt (215) vorgesehen ist, wobei die Gelenkbereiche (216) durch lokale strukturelle Schwächungen des Hufeisens (200) verwirklicht sind, wobei die Gelenkbereiche nahe dem Zehenabschnitt ausgebildet sind und so positioniert sind, dass sie dem Übergang von der Zehe zu den Vierteln eines Hufes entsprechen, und dadurch, dass der Zehenabschnitt (210) und die Fersenabschnitte (220) fest sind.

2. Hufeisen nach Anspruch 1, ferner **gekennzeichnet durch** einen im Wesentlichen flachen, etwa U-förmigen Körper (205) und eine Erhöhung (225), die an dem äußeren Teil des Körpers ausgebildet ist und sich entlang des Körpers (205) erstreckt, wobei die Erhöhung (225) eine erste Form in dem Zehenabschnitt (210) und zumindest eine zweite Form in den Seitenabschnitten (215) aufweist, wobei die zweite Form der Erhöhung eine kleinere Querschnittsfläche als die erste Form aufweist und die Übergänge zwischen den ersten und zweiten Formen die Gelenkbereiche (216) ausbilden.

3. Hufeisen nach Anspruch 1 oder 2, bei dem die Gelenkbereiche (216) für die Federbewegung des Hufeisens nahe dem Zehenabschnitt (210) ausgebildet sind.

4. Hufeisen nach Anspruch 1 oder 2, bei dem die Gelenkbereiche für die Federbewegung des Hufeisens derart angeordnet sind, dass sie dem Übergang von der Zehe (110) zu den Vierteln (115) eines Pferdehufes (100) entsprechen.

5. Hufeisen nach einem der Ansprüche 2 bis 4, bei dem die Erhöhung (225) mit zumindest einem Ausschnitt (250) in jedem der zwei Seitenabschnitte (215) versehen ist, um die Querschnittsfläche der Erhöhung zu reduzieren, und die Ausschnitte (250) in den Gelenkbereichen (216) angeordnet sind.

6. Hufeisen nach einem der Ansprüche 2 bis 5, bei dem der Körper (205) mit zumindest einer Durchbrechung (225) in jeder der zwei Seitenabschnitte (215) versehen ist, um die Querschnittsfläche der Erhöhung zu reduzieren, und die Durchbrechungen (255) in den Gelenkbereichen (216) angeordnet sind.

7. Hufeisen nach einem der vorhergehenden Ansprüche, bei dem das Hufeisen (200) aus einem gehärteten Borstahl-Material ist.

8. Hufeisen nach einem der vorhergehenden Ansprüche, bei dem das Hufeisen (200) aus einem Stahl-Material mit einer Härte über 10 HRC, und sogar weiter bevorzugt über 30 HRC, ist.

## Revendications

1. Fer à cheval (200) réalisé en un metal massif homogène comprenant une section de pointe (210) de chaque côté, suivie par des sections latérales (215) et par des sections de talon (220), **caractérisé en ce qu'**au moins une région d'articulation de courbure est prévue dans chaque section latérale (215), lesdites régions d'articulation étant réalisées par des affaiblissements structurels locaux du fer à cheval (200), dans lequel les régions d'articulation sont formées à proximité proche de la section de pointe et sont positionnées de manière à correspondre à la transition depuis la pointe jusqu'aux quarts d'un sabot, et **en ce que** la section de pointe (210) et les sections de talon (220) sont rigides.

2. Fer à cheval selon la revendication 1, **caractérisé en outre par** un corps (205) approximativement en forme de U essentiellement plat et une arête (225) formée sur la partie extérieure du corps et s'étendant le long du corps (205), ladite arête (225) ayant une première forme dans la section de pointe (210) et au moins une deuxième forme dans les sections latérales (215), dans lequel les deuxièmes formes de l'arête ont une zone de section transversale plus petite que la première forme et les transitions entre les premières et deuxièmes formes forment les régions d'articulation (216).

3. Fer à cheval selon la revendication 1 ou 2, dans lequel des régions d'articulation pour le mouvement de suspension du fer à cheval sont formées en proximité proche de la section de pointe (210).

4. Fer à cheval selon la revendication 1 ou 2, dans lequel des régions d'articulation pour le mouvement de suspension du fer à cheval sont situées de manière à correspondre à la transition depuis la pointe (110) jusqu'aux quarts (115) d'un sabot de cheval.

5. Fer à cheval selon l'une quelconque des revendications 2 à 4, dans lequel l'arête (225) comporte au moins une découpe (250) dans chacune des deux sections latérales (215) pour réduire la zone de section transversale de l'arête, et les découpes (250) sont situées dans les régions d'articulation (216).

6. Fer à cheval selon l'une quelconque des revendications 2 à 5, dans lequel le corps (205) comporte au moins un trou traversant (255) dans chacune des deux sections latérales (215) pour réduire la zone de section transversale de l'arête, et les trous traversant (255) sont situés dans les régions d'articulation (216).

7. Fer à cheval selon l'une quelconque des revendications précédentes, dans lequel le fer à cheval (200) est réalisé en un matériau d'acier au bore durci.

8. Fer à cheval selon l'une quelconque des revendications précédentes, dans lequel le fer à cheval (200) est réalisé dans un matériau d'acier ayant une dureté supérieure à 10 HRC, et même de préférence supérieure à 30 HRC.
